# EUROPÄISCHE PATENTSCHRIFT

(11) **EP 0 560 022 B1**
(45) Veröffentlichungstag und Bekanntmachung des Hinweises auf die Patenterteilung: **03.01.1996**
(21) Anmeldenummer: 93100762.9
(22) Anmeldetag: 20.01.1993
(51) Int. Cl.: A47B 43/00, A47F 5/10

(54) **Transport- und Verkaufsständer**
Transport- and sales stand
Wagon- et présentoir de marchandise

(30) Priorität: 10.03.1992 DE 9203154 U
(43) Veröffentlichungstag der Anmeldung: 15.09.1993
(73) Patentinhaber: FIRMA FRANZ KAHLER TRANSPORTGERÄTEBAU INDUSTRIEBEDARF, D-89257 Illertissen (DE)
(72) Erfinder: Kahler, Gerhard, D-89257 Illertissen (DE)
(74) Vertreter: Fay, Hermann, Dipl.-Phys. Dr.

(56) Entgegenhaltungen:
- CH-A- 518 702
- DE-U- 9 010 709
- US-A- 1 894 176
- US-A- 2 305 629
- US-A- 2 901 124

## Beschreibung

Die Erfindung betrifft einen Transport- und Verkaufsständer mit horizontal angeordneten Borden, die gemeinsam an eine Parallelogrammführung bildende Lenker angeschlossen sind, die schwenkbar an Stützen eines, insbes. fahrbar ausgestalteten Gestells gelagert sind, wobei die Lenker jeweils mindestens zu zweit an sich gegenüber liegenden Rändern der Borde über Gelenke angeschlossen und bezüglich ihrer Schwenkstellungen feststellbar sind.

Derartige, aus der Praxis bekannte Ständer ermöglichen es, wahlweise die Borde in senkrechter Flucht übereinander oder, durch Schwenken der Lenker, auch in seitlicher Versetzung gegeneinander einzustellen. In ersterem Fall nimmt der Ständer, in der Draufsicht gesehen, den geringstmöglichen Platz ein, im anderen Fall erlauben die Borde eine vorteilhafte optische Präsentation und Zugänglichkeit der Ware.

Der Erfindung liegt die Aufgabe zugrunde, einen Transport- und Verkaufsständer der eingangs genannten Art so auszubilden, daß die Borde auch eine gemeinsam einen Tisch bildende Einstellung ermöglichen.

Ein diese Aufgabe lösender Ständer ist in Verbindung mit den eingangs genannten Merkmalen nach der Erfindung dadurch gekennzeichnet, daß an jedem Bordrand die Achsen der die beiden Lenker mit dem Bord verbindenden Gelenke gegeneinander senkrecht zur Ebene des Bordes versetzt sind, und zwar um den Abstand, der gleich der Summe der Abstände jeweils zwischen der Gelenkachse und den sich gegenüber liegenden Längsseiten der beiden Lenker ist, und daß die Länge des Lenkerabschnitts zwischen jeweils zwei am Lenker aufeinander folgenden Achsen mindestens so groß ist, daß die Borde in gemeinsamer Ebene nebeneinander passen.

Der durch die Erfindung erreichte Vorteil besteht im wesentlichen darin, daß aufgrund der gegenseitig versetzten Gelenkachsen die Borde unter Bildung einer gemeinsamen Tischfläche in eine horizontale Ebene nebeneinander verstellt werden können. Dabei liegen die Lenker an jeder Bordseite teilweise horizontal aneinander. Die Borde bilden dann einen beweglichen Arbeitstisch. Um dabei die Gefahr eines Umkippens des Ständers bei einseitiger Beladung der Seitenborde zu vermeiden, können diese Borde nach unten abgestützt werden, beispielsweise durch an den seitlichen Borden ansetzbare Stützen. Zum Feststellen einer vorgegebenen Schwenkstellung ist zweckmäßigerweise an mindestens einem der Lenker eine den anderen Lenker an derselben Bordseite außen übergreifende Verriegelungsstrebe schwenkbar angebracht, die zum Feststellen vorgegebener Schwenkstellungen Verriegelungsaufnahmen aufweist für ein am anderen Lenker befestigtes Verriegelungsglied.

Das Verriegelungsglied ist vorzugsweise als Schenkel eines die Verriegelungsstrebe umfassenden und führenden Bügels ausgeführt.

Sind Verriegelungsstreben an den Lenkern beider Bordseiten vorhanden, kann deren Handhabung dadurch vereinfacht werden, daß die freien Enden der beiden Verriegelungsstreben durch eine Querleiste verbunden sind. An ihr können die Verriegelungsstreben mit einem Handgriff gleichzeitig betätigt werden.

In einer bevorzugten Ausführungsform besitzen die Borde eine rechtwinklige Grundfläche, so daß sie praktisch lückenlos in der Tischeinstellung aneinander grenzen können.

Vorteilhaft ist es, wenn die Borde als herausnehmbare Wannen, z. B. aus feuerverzinktem Stahlblech oder Kunststoff, ausgeführt sind. Sie verhindern ein Abrutschen der Waren von den Borden beim Transport. Befinden sich Blumen oder Pflanzen in den Wannen, so ist es möglich, diese zu wässern, ohne daß Wasser an die anderen Teile der Ständer oder auf den Fußboden gelangt.

Es ist günstig, wenn die Lenker und die Stützen des Gestells als quadratische Hohlprofile ausgebildet sind. Hierdurch wird das Gewicht des Ständers herabgesetzt, bei gleichzeitiger Beibehaltung der Stabilität.

Im folgenden wird die Erfindung an einem in der Zeichnung dargestellten Ausführungsbeispiel näher erläutert; es zeigen:
- Fig. 1: eine perspektivische Darstellung des Transport- und Verkaufsständers mit stufenförmiger Anordnung der Borde,
- Fig. 2: eine Seitenansicht des Transport- und Verkaufsständers mit senkrechter Anordnung der Borde, wobei die Stützen des fahrbaren Gestells gestrichelt gezeichnet sind und
- Fig. 3: eine Seitenansicht des Transport- und Verkaufsständers mit waagerechter Anordnung der Borde, wobei die Stützen des fahrbaren Gestells gestrichelt gezeichnet sind.

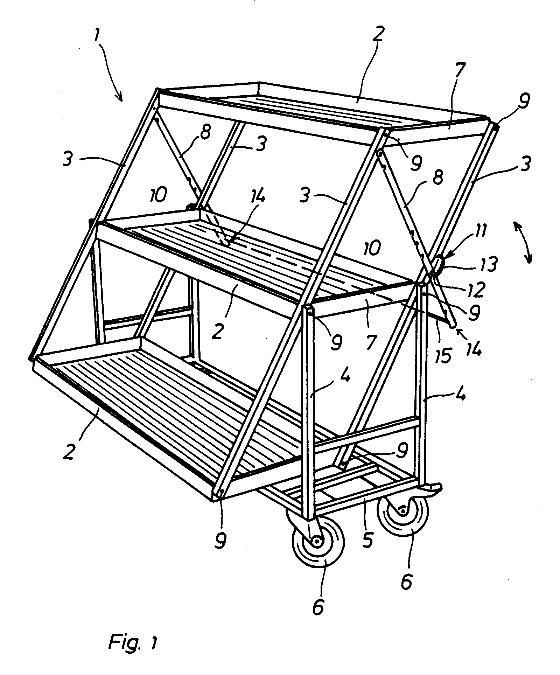

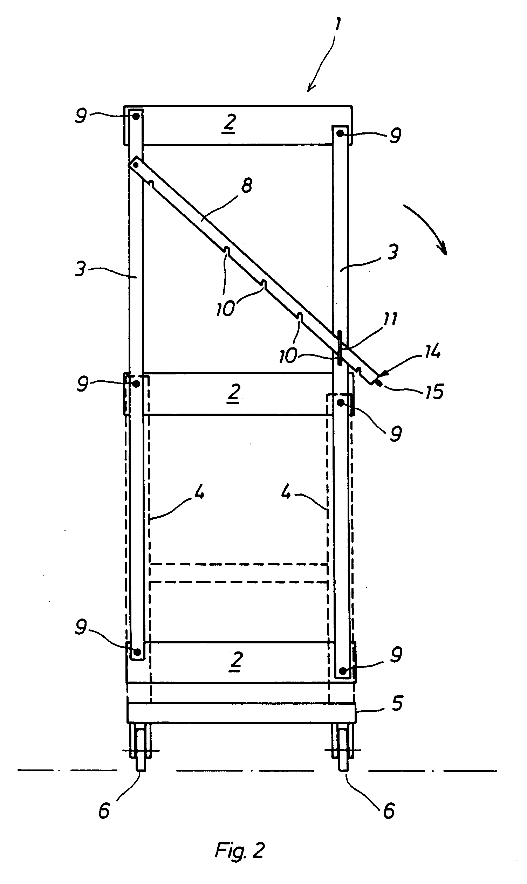

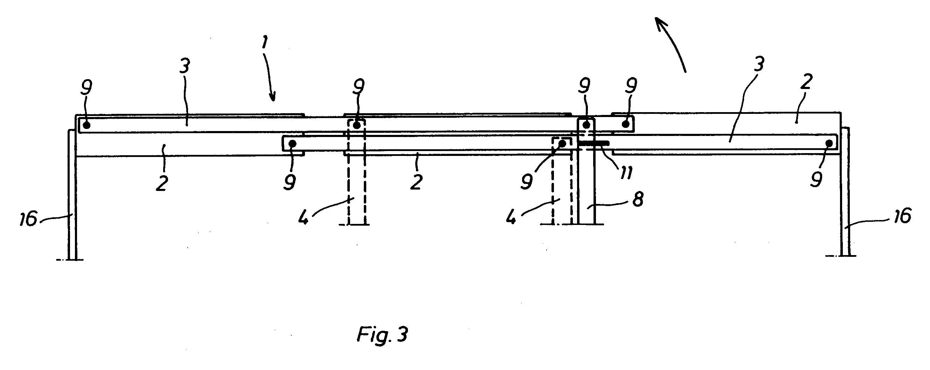

Die in Fig. 1 dargestellte Ausführungsform des Transport- und Verkaufsständer 1 weist drei Borde 2 auf, die eine rechtwinklige Grundfläche besitzen. Die Borde 2 sind in dieser Verkaufs- bzw. Präsentationsstellung stufenförmig angeordnet. An zwei Seiten der horizontal angeordneten Borde 2 befinden sich zwei über Gelenke 9 an sie angeschlossene Lenker 3, die gemeinsam eine Parallelogrammführung bilden. Diese sind schwenkbar an Stützen 4, in Fig. 2 und 3 gestrichelt gezeichnet, eines Gestells 5 gelagert. Zum Transport besitzt dieses bodenseitig angebrachte Rollen 6. An beiden Bordseiten 7 ist an einen Lenker 3 eine Verriegelungsstrebe 8 schwenkbar angebracht. Sie weist zum Feststellen 10 vorgegebener Schwenkstellungen Verriegelungsaufnahmen für das Verriegelungsglied 11 auf. Dieses ist jeweils am anderen Lenker 3 der Bordseite 7 befestigt. Im dargestellten Beispiel ist es als Schenkel 12 eines Bügels 13 ausgeführt. Der Bügel dient gleichzeitig zur Führung der Verriegelungsstrebe 8. Die Enden 14 der Verriegelungsstreben 8 an den sich gegenüber liegenden Bordseiten 7 sind durch eine Querleiste 15 verbunden.

In Fig. 2 sind die Borde 2 vertikal übereinander angeordnet. Die Lenker 3 verlaufen hierbei vertikal parallel. Man erkennt, daß die sich an einer Bordseite 2 befindenden Achsen der Gelenke 9 vertikal zur Ebene des Bords 2 gegeneinander versetzt sind, und zwar um den Abstand, der gleich der Summe der Abstände jeweils zwischen der Gelenkachse und den gegenüber liegenden Längsseiten der Lenker 3 ist. So lassen sich die Borde 2 in eine gemeinsame Ebene schwenken, und die Lenker 3 liegen horizontal aneinander an, ohne sich gegenseitig zu stören. Bei einer horizontalen Anordnung der Borde 2, in einer gemeinsamen Ebene mit teilweise horizontal aneinander liegenden, Lenkern 3, wie in Fig. 3 dargestellt, erkennt man, daß bei quadratischen Hohlprofilen als Lenker 3 und einer an ihnen symmetrischen Achsanbringung die Versetzung der Achsen ungefähr der Seitenlänge des quadratischen Querschnitts der Hohlprofile entspricht. Um bei ausgeklappten Borden 2 ein Umkippen des Ständers 1 bei einseitiger Belastung zu vermeiden, sind an den außen liegenden Borden 2 zusätzliche Stützen 16 angebracht.

Der Abstand zweier auf einem Lenker 3 nebeneinander liegenden Achsen muß so gewählt sein, daß sich die Borde 2 beim Schwenken nicht teilweise horizontal aneinander liegend überlappen. In einer vorteilhaften Ausführungsform sind die Borde 2 als herausnehmbare Wannen, z. B. aus feuerverzinktem Stahlblech oder Kunststoff, ausgeführt. Ferner sind die Lenker 3 und die Stützen 4 des Gestells als Hohlprofile ausgebildet.

## Patentansprüche

1. Transport- und Verkaufsständer (1) mit horizontal angeordneten Borden (2), die gemeinsam an eine Parallelogrammführung bildende Lenker (3) angeschlossen sind, die schwenkbar an Stützen (4) eines, insbes. fahrbar ausgestalteten Gestells (5) gelagert sind, wobei die Lenker (3) jeweils mindestens zu zweit an sich gegenüberliegenden Rändern (7) der Borde (2) über Gelenke (9) angeschlossen und bezüglich ihrer Schwenkstellungen feststellbar sind, dadurch gekennzeichnet, daß an jedem Bordrand (7) die Achsen der die beiden Lenker (3) mit dem Bord (2) verbindenden Gelenke (9) gegeneinander senkrecht zur Ebene des Bordes (2) versetzt sind, und zwar um den Abstand, der gleich der Summe der Abstände jeweils zwischen der Gelenkachse und den sich gegenüber liegenden Längsseiten der Lenker (3) ist, und daß die Länge des Lenkerabschnitts zwischen jeweils zwei am Lenker (3) aufeinander folgenden Achsen mindestens so groß ist, daß die Borde (2) in gemeinsamer Ebene nebeneinander passen.

2. Ständer nach Anspruch 1, dadurch gekennzeichnet, daß mindestens an einem der Lenker (3) eine den anderen Lenker (3) an derselben Bordseite (7) außen übergreifende Verriegelungsstrebe (8) schwenkbar angebracht ist, die zum Feststellen vorgegebener Schwenkstellungen Verriegelungsaufnahmen (10) aufweist für ein am anderen Lenker (3) befestigtes Verriegelungsglied (11).

3. Ständer nach Anspruch 2, dadurch gekennzeichnet, daß das Verriegelungsglied (11) als Schenkel (12) eines die Verriegelungsstreben (8) umfassenden und führenden Bügels (13) ausgeführt ist.

4. Ständer nach Anspruch 2 oder 3, dadurch gekennzeichnet, daß bei an den Lenkern (3) beider Bordseiten (7) vorgesehenen Verriegelungsstreben (8) die freien Enden (14) beider Verriegelungsstreben (8) durch eine Querleiste (15) verbunden sind.

5. Ständer nach einem der Ansprüche 1 bis 4, dadurch gekennzeichnet, daß die Borde (2) eine rechtwinklige Grundfläche besitzen.

6. Ständer nach einem der Ansprüche 1 bis 5, dadurch gekennzeichnet, daß die Borde (3) als herausnehmbare Wannen, z. B. aus feuerverzinktem Stahlblech oder Kunststoff, ausgeführt sind.

7. Ständer nach einem der Ansprüche 1 bis 6, dadurch gekennzeichnet, daß die Lenker (3) und die Stützen (4) des Gestells (5) als quadratische Hohlprofile ausgebildet sind.

## Claims

1. Transportable sales stand (1) comprising horizontally disposed shelves, which are connected in common to a link (3) forming a parallelogram-type guide and which are mounted pivotably on supports (4) of a frame (5) which is in particular transportable, wherein the links (3) are connected at least in twos to mutually opposite edges (7) of the shelves (2) via hinges (9) and are fixable at their pivotal points, characterised in that at each shelf edge (7) the axes of the hinges (9) connecting the two links (3) to the shelf (2) are staggered relative to one another perpendicular to the plane of the shelf (2), in particular by a distance equal to the sum of the distances between the respective hinge axis and the mutually opposite longitudinal sides of the links (3), and in that the length of the link section between every two axes consecutive to one another on the link (3) is at least sufficiently large that the shelves (2) fit next to one another in a common plane.

2. Stand according to claim 1, characterised in that a locking strut (8) is pivotably mounted on at least one of the links (3) and overlaps the exterior of the other link (3) on the same shelf side (7), and has, for fixing specified pivotal points, locking seats (10) for a locking member (11) fixed to the other link (3).

3. Stand according to claim 2, characterised in that the locking member (11) takes the form of one arm (12) of a shackle (13) encompassing and guiding the locking struts (8).

4. Stand according to claim 2 or 3, characterised in that in the case of locking struts (8) provided on the links (3) of both shelf sides (7), the free ends (14) of both locking struts (8) are connected by a crossbar (15).

5. Stand according to one of claims 1 to 4, characterised in that the shelves (2) have a rectangular base area.

6. Stand according to one of claims 1 to 5, characterised in that the shelves (3) are formed as removable trays, e.g. of hot-galvanised sheet steel or plastics material.

7. Stand according to one of claims 1 to 6, characterised in that the links (3) and the supports (4) of the frame (5) are formed as square hollow profiles.

## Revendications

1. Support de transport et de vente (1) comportant des tablettes (2) disposées horizontalement, reliées ensemble à des montants (3) constituant un parallélogramme et placés de manière pivotante sur les appuis (4) d'un châssis (5), de configuration en particulier mobile, les montants (3) étant reliés à chaque fois au moins par deux à des bords (7) opposés des tablettes (2) par l'intermédiaire d'articulations (9), et pouvant être bloqués en ce qui concerne leurs positions de pivotement, caractérisé en ce qu'à chaque bord (7) de tablette, les axes des articulations (9) reliant les deux montants (3) à la tablette (2) sont décalés l'un par rapport à l'autre, perpendiculairement au plan de la tablette (2), et ceci selon l'écart qui est égal à la somme des écarts présents à chaque fois entre l'axe de l'articulation et les côtés longitudinaux opposés des deux montants (3), et en ce que la longueur du secteur de montant, à chaque fois entre deux axes se suivant sur le montant (3), est au moins assez importante pour que les tablettes (2) puissent être disposées l'une à côté de l'autre dans un plan commun.

2. Support suivant la revendication 1, caractérisé en ce que, sur l'un au moins des montants (3), un bras de verrouillage (8) s'engageant par l'extérieur avec l'autre montant (3) sur le même côté (7) de tablette est appliqué de manière pivotante, ledit bras de verrouillage présentant, pour le blocage de position de pivotement prédéterminées, des logements de verrouillage (10) pour un élément de verrouillage (11) fixé sur l'autre montant (3).

3. Support suivant la revendication 2, caractérisé en ce que l'élément de verrouillage (11) est réalisé sous la forme d'une branche (12) d'un étrier (13) comprenant et guidant les bras de verrouillage (8).

4. Support suivant la revendication 2 ou 3, caractérisé en ce que, pour ce qui concerne les bras de verrouillage (8) prévus sur les montants (3) des deux côtés (7) de tablette, les extrémités libres (14) des deux bras de verrouillage (8) sont reliées par une traverse (15).

5. Support suivant l'une des revendications 1 à 4, caractérisé en ce que les tablettes (2) comportent une surface rectangulaire.

6. Support suivant l'une des revendications 1 à 5, caractérisé en ce que les tablettes (2) sont réalisées sous la forme de baquets amovibles, fabriqués par exemple à partir d'une tôle en acier galvanisée à chaud ou d'un plastique.

7. Support suivant l'une des revendications 1 à 6, caractérisé en ce que les montants (3) et les appuis (4) du châssis (5) sont réalisés sous la forme de profilés creux carrés.
